(19) Europäisches Patentamt
European Patent Office
Office européen des brevets

(11) EP 3 030 014 A1

(12) EUROPEAN PATENT APPLICATION
published in accordance with Art. 153(4) EPC

(43) Date of publication:
08.06.2016 Bulletin 2016/23

(51) Int Cl.:
H04W 52/28 (2009.01)

(21) Application number: 13890303.4

(86) International application number:
PCT/CN2013/080342

(22) Date of filing: 29.07.2013

(87) International publication number:
WO 2015/013866 (05.02.2015 Gazette 2015/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Fujitsu Limited
Kawasaki-shi, Kanagawa 211-8588 (JP)

(72) Inventors:
• LI, Hongchao
  Beijing 100025 (CN)
• ZHOU, Hua
  Beijing 100025 (CN)

(74) Representative: Schultes, Stephan
Haseltine Lake LLP
300 High Holborn
London WC1V 7JH (GB)

(54) POWER CONTROL METHOD, USER EQUIPMENT AND COMMUNICATION SYSTEM

(57) Embodiments of the present disclosure provide a power control method and a UE. The method includes: a UE configures power control parameters respectively for two or more pieces of connectivity; and the UE controls power of signals in corresponding connectivity according to the power control parameters, so as to respectively perform power control on the two or more pieces of connectivity. With the embodiments of the present disclosure, demands of a scenario having multiple links may be satisfied.

101
a UE configures power control parameters respectively for two or more pieces of connectivity

102
the UE controls power of signals in corresponding connectivity according to the power control parameters, so as to respectively perform power control on the two or more pieces of connectivity

Fig. 1

201
a UE receives information transmitted by a base station or another UE

202
The UE configures power control parameters respectively for the two or more pieces of connectivity according to the received information

203
the UE controls power of a signal in corresponding connectivity according to the power control parameters, so as to control power of the two or more pieces of connectivity respectively

Fig. 2

**Description**

Technical Field

The present disclosure relates to the field of communications, and in particular to a power control method, a UE and a communication system.

Background

In order to improve cell coverage and user experiences under an LTE-A (long-term evolution advanced) system and increase throughput of the system and data transmission rate of the user, a scenario where multiple small cells are densely deployed and a transmission/receiving technology corresponding to it will be introduced. Such a technology may enhance coverage of the network, increase reuse ratios of resources and throughput of the system, and control totally consumed energies of an access network while satisfying a certain network capacity.

Small cells and small cell clusters may be deployed according to demands of an operator and regional characteristics of traffics by using such low-power nodes as a micro base station (such as a pico eNB), a remote radio head (RRH), and a home base station (such as a home eNB), etc. In order that air-interface and access network technologies are more adapted to such channel conditions and environmental characteristics, some new functions and characteristics shall be introduced. One of the characteristics is dual-connectivity, which provides multiple pieces of connectivity for UE to perform data transmission and control operations.

And on the other hand, a proximity service of peer-to-peer (P2P) communication or device-to-device (D2D) communication is a relatively direct interaction and communication form between user equipment (UE). If there is no support of infrastructural installations of a network side, the D2D communication is more like an ad hoc network.

If there is support of the network side, such as D2D being integrated into a cellular communication network, following advantages and applications shall be brought about: for example, D2D discovery may serve for application of a neighboring device, and such a characteristic of an adjacent user equipment may serve for multiple commercial application levels; or D2D communication may be used when a neighboring user equipment is in need of communication, and employment of such a communication manner may increase throughput of the system, lower power consumption of the user equipment, and perform traffic offloading from an eNB side; or the technology using D2D as relay enhances cell coverage.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

Summary

It was found by the inventor that in a radio communication system in which one of the above scenarios is introduced or the above scenarios both are introduced, an existing user power control mechanism may not be adapted for the new scenario and application. This is because that one of user equipments needs to handle with more than one radio links, but an existing set of power control parameters or set of power control mechanisms cannot satisfy the new requirements.

Embodiments of the present disclosure provide a power control method, a UE and a communication system, with an object being to perform power control of a signal in a small cell scenario or a D2D scenario where there exist multiple links, so as to satisfy demands of multiple scenarios.

According to an aspect of the embodiments of the present disclosure, there is provided a power control method, including:

configuring, by a UE, power control parameters respectively for two or more pieces of connectivity; and
controlling power of signals in corresponding connectivity according to the power control parameters, so as to respectively perform power control on the two or more pieces of connectivity.

According to another aspect of the embodiments of the present disclosure, there is provided a UE, including:

a parameter configuring unit configured to configure power control parameters respectively for two or more pieces of connectivity; and
a power controlling unit configured to control power of signals in corresponding connectivity according to the power control parameters, so as to respectively perform power control on the two or more pieces of connectivity.

According to a further aspect of the embodiments of the present disclosure, there is provided a communication system, including the UE as described above.

According to still another aspect of the embodiments of the present disclosure, there is provided a computer-readable program, wherein when the program is executed in a UE, the program enables a computer to carry out the power control method as described above in the UE.

According to yet another aspect of the embodiments of the present disclosure, there is provided a storage medium in which a computer-readable program is stored, wherein the computer-readable program enables a computer to carry out the power control method as described above in a UE.

An advantage of the embodiments of the present disclosure exists in that the UE configures power control parameters respectively for two or more pieces of connectivity, thereby satisfying demands of a small cell scenario or a D2D scenario where there exist multiple links.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scopes of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

Figure 1 is a flowchart of a power control method of an embodiment of the present disclosure;
Figure 2 is another flowchart of the power control method of the embodiment of the present disclosure;
Figure 3 is a further flowchart of the power control method of the embodiment of the present disclosure;
Figure 4 is still another flowchart of the power control method of the embodiment of the present disclosure;
Figure 5 is a schematic diagram of an example of the power control method of the embodiment of the present disclosure;
Figure 6 is a schematic diagram of a structure of a UE of an embodiment of the present disclosure;
Figure 7 is another schematic diagram of the structure of the UE of the embodiment of the present disclosure;
Figure 8 is a further schematic diagram of the structure of the UE of the embodiment of the present disclosure; and
Figure 9 is a schematic diagram of a structure of a communication system of an embodiment of the present disclosure.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

Embodiment 1

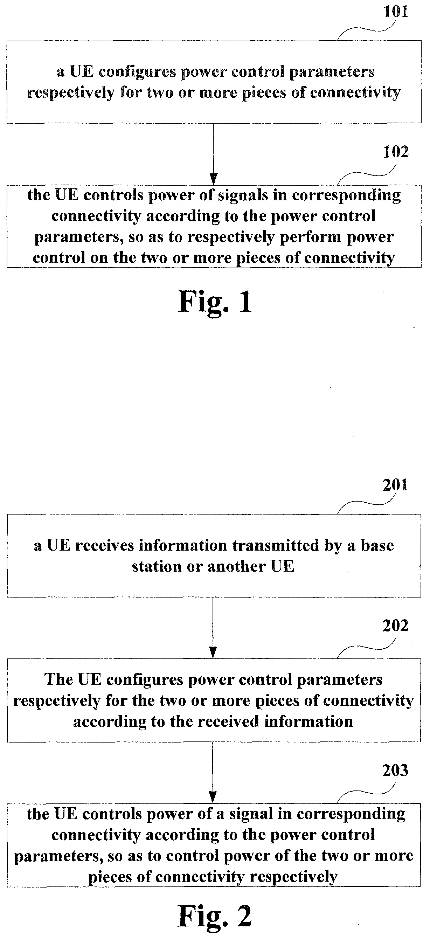

An embodiment of the present disclosure provides a power control method. Fig. 1 is a flowchart of the power control method of the embodiment of the present disclosure. As shown in Fig. 1, the method includes:

step 101: a UE configures power control parameters respectively for two or more pieces of connectivity; and

step 102: the UE controls power of signals in corresponding connectivity according to the power control parameters, so as to respectively perform power control on the two or more pieces of connectivity.

In this embodiment, the two or more pieces of connectivity may include cellular connectivity between the UE and a base station, and/or, D2D connectivity between the UE and another UE.

For example, the UE may maintain two communication links at the same time, one is a cellular link between it and the base station, and the other one is a D2D link between it and the other UE; or they may also be two D2D links between it and other two UEs; or one is a cellular link between it and a macro base station, and the other one is a cellular link between it and a pico base station. However, the present disclosure is not limited thereto, and they may also be other connectivity, for example, and a particular application scenario may be determined according to an actual situation.

It should be noted that the present disclosure is described taking two pieces of connectivity as an example only. However, the present disclosure is not limited thereto, and more than two pieces of connectivity are also applicable to the present disclosure.

In this embodiment, uplink interference coordination may be performed in some application scenarios. The UE may be scheduled in different uplink resources, and the different uplink resources may be time division, and may also be frequency division. As receiving points/base stations/cells/connectivity to which different resources correspond may be different, there may exist different uplink interference situations and pathloss, etc.

In some application scenarios, if the base station uses almost blank subframes (ABSs) in downlink, UL grant carried in the ABSs will be much less, even no UL grant is carried in the ABSs. Correspondingly, in some uplink subframe subsets, uplink interference characteristics will be different.

In this embodiment, for two or more pieces of connectivity, a set of power control parameters (or power control mechanisms) may be respectively configured for different connectivity. Each set of power control parameters serve for one piece of connectivity, thereby performing signal transmission more accurately, and satisfying demands of different scenarios.

In particular implementation, the relevant art may be referred to for how each piece of connectivity performs power control according to the power control parameters. Furthermore, as to how to configure each piece of connectivity with corresponding power control parameters, the UE may configure according to information transmitted by the base station or another UE, and may also configure according to a result of measurement of a signal performed by itself.

Fig. 2 is another flowchart of the power control method of the embodiment of the present disclosure. As shown in Fig. 2, the method includes:

step 201: a UE receives information transmitted by a base station or another UE;

step 202: the UE configures power control parameters respectively for the two or more pieces of connectivity according to the received information; and

step 203: the UE controls power of a signal in corresponding connectivity according to the power control parameters, so as to control power of the two or more pieces of connectivity respectively.

In this implementation, the UE may configure the power control parameters according to the information transmitted by the base station or the other UE. For example, UE A may receive configuration information transmitted by the base station and configure the power control parameters to which a cellular link corresponds; or it may receive measurement information transmitted by UE B and configure the power control parameters to which a D2D link corresponds.

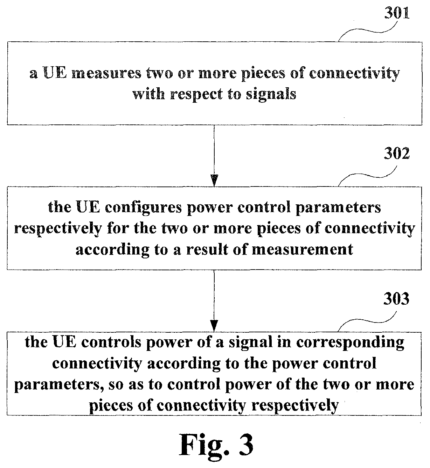

Fig. 3 is a further flowchart of the power control method of the embodiment of the present disclosure. As shown in Fig. 3, the method includes:

step 301: a UE measures two or more pieces of connectivity with respect to signals;

step 302: the UE configures power control parameters respectively for the two or more pieces of connectivity according to a result of measurement; and

step 303: the UE controls power of a signal in corresponding connectivity according to the power control parameters, so as to control power of the two or more pieces of connectivity respectively.

In this implementation, the UE may measure signals of different pieces of connectivity, and configure the power control parameters according to results of measurement. For example, UE A may measure a signal in cellular connectivity, and configure the power control parameters to which the cellular link corresponds according to a result of measurement; or UE A may measure a signal in D2D connectivity between it and UE B, and configure the power control parameters to which the D2D link corresponds according to a result of measurement.

It should be noted that how to configure the power control parameters is only illustrated above; however, the present disclosure is not limited thereto. For example, the UE may configure the power control parameters to which the cellular link corresponds according to configuration information of the base station side, and configure the power control parameters to which the D2D connectivity corresponds according to a result of measurement, etc.; and a particular manner of configuration may be determined according to an actual situation.

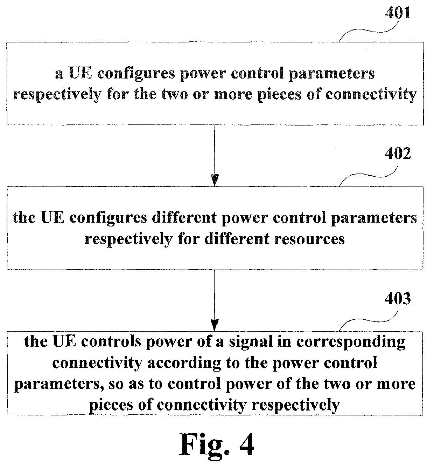

In this embodiment, each set of power control parameters may further correspond to a set of resources. Fig. 4 is still another flowchart of the power control method of the embodiment of the present disclosure. As shown in Fig. 4, the method includes:

step 401: a UE configures power control parameters respectively for the two or more pieces of connectivity;
step 402: the UE configures different power control parameters respectively for different resources; and
step 403: the UE controls power of a signal in corresponding connectivity according to the power control parameters, so as to control power of the two or more pieces of connectivity respectively.

For example, the resources include: time domain resources and/or frequency domain resources. In particular, the time domain resources may include a subframe subset, and the frequency domain resources may include a resource block group (RB group), a resource block set (RB set), or a component carrier.

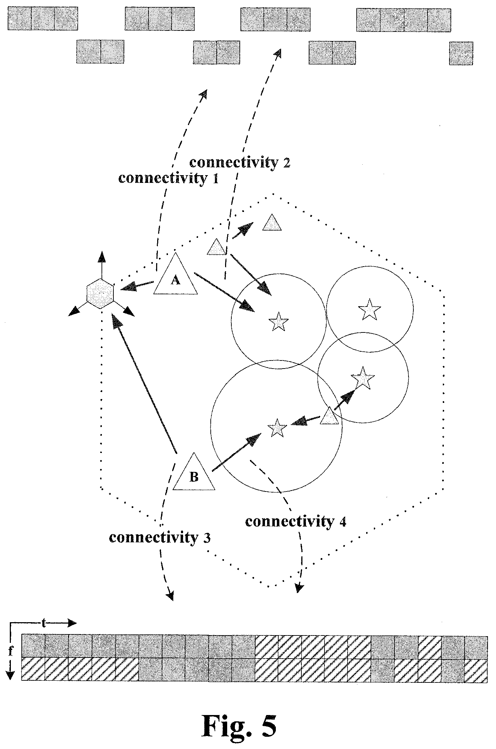

Fig. 5 is a schematic diagram of an example of the embodiment of the present disclosure, and description shall be given taking that UE A has two pieces of connectivity, 1 and 2, respectively, and UE B has two pieces of connectivity, 3 and 4, respectively, as an example.

As shown in Fig. 5, UE A may configure and use different power control parameters in different connectivity 1 and connectivity 2, and at the same time, the power control parameters may correspond to different subframe sets.

$$P\_1 = \min\{Pcmax, Po\_1 + alpha\_1*PL\_1\} \text{ in subset\#1}$$

$$P\_2 = \min\{Pcmax, Po\_2 + alpha\_2*PL\_2\} \text{ in subset\#2;}$$

where, P_1 denotes transmission power of connectivity 1, Po_1 denotes receiver target receiving power of connectivity 1, alpha_1 denotes a pathloss compensation factor of connectivity 1, PL_1 denotes an estimated pathloss value of connectivity 1, P_2 denotes transmission power of connectivity 2, Po_2 denotes receiver target receiving power of connectivity 2, alpha_2 denotes a pathloss compensation factor of connectivity 2, PL_2 denotes an estimated pathloss value of connectivity 2; and Pcmax is a predefined value, which may be a value configured by the network side, and may also be a value predefined by the UE side.

As shown in Fig. 5, UE B may configure and use different power control parameters in different connectivity 3 and connectivity 4, and may configure power control parameters for different frequency domain resources and/or time domain resources.

$$P\_3 = Po\_3 + alpha\_3*PL\_3+10*\log(M\_3) \text{ in subset/RBG \#1}$$

$$P\_4 = Po\_4 + alpha\_4*PL\_4+10*\log(M\_4) \text{ in subset/RBG \#2.}$$

When the resources used by connectivity 3 and connectivity 4 are located at a transmission time interval (TTI) at the same time, $P\_total = \min\{ Pcmax, 10* \log[10^{(P\_3/10)}+10^{(P\_4/10)}]\}$.

where, P_3 denotes transmission power of connectivity 3, Po_3 denotes receiver target receiving power of connectivity 3, alpha_3 denotes a pathloss compensation factor of connectivity 3, M_3 denotes the number of PRBs used by the UE in connectivity 3, P_4 denotes transmission power of connectivity 3, Po_4 denotes receiver target receiving power of connectivity 4, alpha_4 denotes a pathloss compensation factor of connectivity 4, and M_4 denotes the number of PRBs used by the UE in connectivity 4; and when the resources used by connectivity 3 and connectivity 4 are located at a TTI at the same time, it is needed to calculate that total transmission power should not exceed maximum transmission power; and P_total denotes total transmission power of the UE.

It should be noted that configuring the power control parameters for different resources regarding two or more pieces of connectivity is only shown in Fig. 5; however, the present disclosure is not limited thereto, and a particular implementation may be determined according to an actual scenario.

It can be seen from the above embodiment that the UE may configure the power control parameters respectively for the two or more pieces of connectivity, thereby satisfying demands of a small cell scenario or a D2D scenario where there exist multiple links.

Embodiment 2

An embodiment of the present disclosure provides a UE, corresponding to the power control method of Embodiment 1, with identical contents being not going to be described any further.

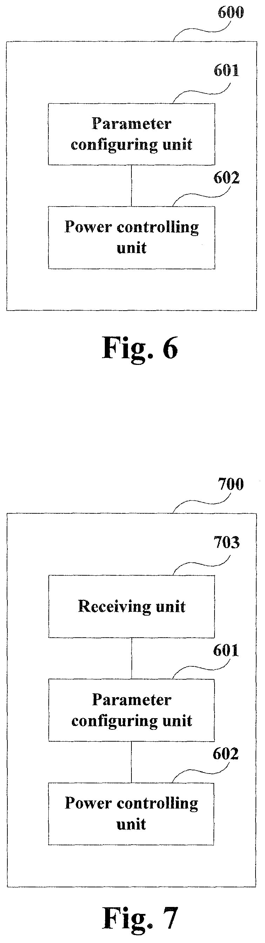

Fig. 6 is a schematic diagram of a structure of a UE of an embodiment of the present disclosure. As shown in Fig. 6, UE 600 includes: a parameter configuring unit 601 and a power controlling unit 602. The relevant art may be referred to for other parts of the UE 600, which are not shown in the figure.

The parameter configuring unit 601 is configured to configure power control parameters respectively for two or more pieces of connectivity, and the power controlling unit 602 is configured to control power of signals in corresponding connectivity according to the power control parameters, so as to respectively perform power control on the two or more pieces of connectivity.

Fig. 7 is another schematic diagram of the structure of the UE of the embodiment of the present disclosure. As shown in Fig. 7, UE 700 includes: a parameter configuring unit 601 and a power controlling unit 602, as described above.

As shown in Fig. 7, the UE 700 may further include a receiving unit 703 configured to receive information transmitted by a base station or another UE; and the configuring unit 601 is further configured to configure power control parameters respectively for the two or more pieces of connectivity according to the received information.

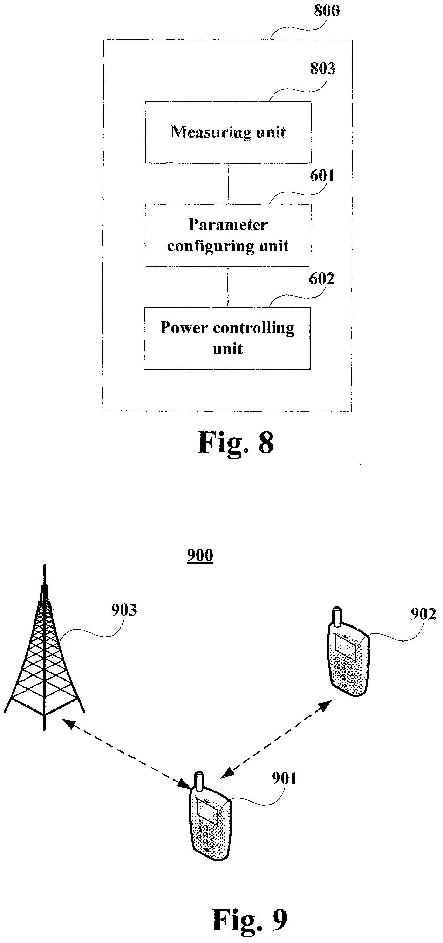

Fig. 8 is a further schematic diagram of the structure of the UE of the embodiment of the present disclosure. As shown in Fig. 8, UE 800 includes: a parameter configuring unit 601 and a power controlling unit 602, as described above.

As shown in Fig. 8, the UE 800 may further include a measuring unit 803 configured to measure the two or more pieces of connectivity with respect to signals; and the configuring unit 601 is further configured to configure power control parameters respectively for the two or more pieces of connectivity according to a result of measurement.

In this embodiment, the configuring unit 601 is further configured to configure different power control parameters for different resources respectively.

It can be seen from the above embodiment that the UE may configure the power control parameters respectively for the two or more pieces of connectivity, thereby satisfying demands of a small cell scenario or a D2D scenario where there exist multiple links.

Embodiment 3

An embodiment of the present disclosure provides a communication system, including the UE as described in Embodiment 2, a base station, and another UE.

Fig. 9 is a schematic diagram of a structure of a communication system of an embodiment of the present disclosure. As shown in Fig. 9, communication system 900 includes UE 901, UE 902 and a base station 903; the UE 901 may be the UE 600, UE 700, or UE 800, in Embodiment 2.

The UE 901 having two pieces of connectivity, D2D connectivity and cellular connectivity, is taken as an example. As shown in Fig. 9, the UE 901 is in D2D connectivity with the UE 902, and is in conventional cellular connectivity with the base station 903. Hence, the UE 901 may configure the D2D connectivity and the cellular connectivity with different power control parameters respectively.

An embodiment of the present disclosure provides a computer-readable program, wherein when the program is executed in a UE, the program enables a computer to carry out the power control method as described in Embodiment 1 in the UE.

An embodiment of the present disclosure provides a storage medium in which a computer-readable program is stored, wherein the computer-readable program enables a computer to carry out the power control method as described in Embodiment 1 in a UE.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in Figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

**Claims**

1. A power control method, comprising:

   configuring, by a UE, power control parameters respectively for two or more pieces of connectivity; and
   controlling power of signals in corresponding connectivity according to the power control parameters, so as to respectively perform power control on the two or more pieces of connectivity.

2. The method according to claim 1, wherein the two or more pieces of connectivity comprise cellular connectivity with a base station and/or device-to-device (D2D) connectivity with another UE.

3. The method according to claim 1, wherein the method further comprises:

   receiving, by the UE, information transmitted by a base station or another UE;
   and, the power control parameters are configured respectively for the two or more pieces of connectivity according to the information which has been received.

4. The method according to claim 1, wherein the method further comprises:

   measuring, by the UE, the two or more pieces of connectivity with respect to signals;
   and, the power control parameters are configured respectively for the two or more pieces of connectivity according to a result of measurement.

5. The method according to claim 1, wherein the method further comprises:

   configuring, by the UE, the power control parameters for different resources respectively.

6. The method according to claim 5, wherein the resources comprise time domain resources and/or frequency domain resources.

7. The method according to claim 6, wherein the time domain resources comprise a subset of subframes, and the frequency domain resources comprise a group of resource blocks, a set of resource blocks, or component carriers.

8. A UE, comprising:

   a parameter configuring unit configured to configure power control parameters respectively for two or more pieces of connectivity; and
   a power controlling unit configured to control power of signals in corresponding connectivity according to the power control parameters, so as to respectively perform power control on the two or more pieces of connectivity.

9. The UE according to claim 8, wherein the UE further comprises:

   a receiving unit configured to receive information transmitted by a base station or another UE;
   and the configuring unit is configured to configure the power control parameters respectively for the two or more pieces of connectivity or resources according to the information which has been received.

10. The UE according to claim 8, wherein the UE further comprises:

    a measuring unit configured to measure the two or more pieces of connectivity with respect to signals;
    and the configuring unit is configured to configure the power control parameters respectively for the two or more pieces of connectivity or resources according to a result of measurement.

11. The UE according to claim 8, wherein the configuring unit is further configured to configure the power control parameters for different resources respectively.

12. A communication system, comprising the UE as claimed in any one of claims 8-11.

13. A computer-readable program, wherein when the program is executed in a UE, the program enables a computer to carry out the power control method as claimed in any one of claims 1-7 in the UE.

14. A storage medium in which a computer-readable program is stored, wherein the computer-readable program enables a computer to carry out the power control method as claimed in any one of claims 1-7 in a UE.

101

a UE configures power control parameters
respectively for two or more pieces of connectivity

102

the UE controls power of signals in corresponding
connectivity according to the power control
parameters, so as to respectively perform power
control on the two or more pieces of connectivity

# Fig. 1

201

a UE receives information transmitted by a base
station or another UE

202

The UE configures power control parameters
respectively for the two or more pieces of connectivity
according to the received information

203

the UE controls power of a signal in corresponding
connectivity according to the power control
parameters, so as to control power of the two or more
pieces of connectivity respectively

# Fig. 2

301

a UE measures two or more pieces of connectivity
with respect to signals

302

the UE configures power control parameters
respectively for the two or more pieces of connectivity
according to a result of measurement

303

the UE controls power of a signal in corresponding
connectivity according to the power control
parameters, so as to control power of the two or more
pieces of connectivity respectively

# Fig. 3

401

a UE configures power control parameters
respectively for the two or more pieces of connectivity

402

the UE configures different power control parameters
respectively for different resources

403

the UE controls power of a signal in corresponding
connectivity according to the power control
parameters, so as to control power of the two or more
pieces of connectivity respectively

# Fig. 4

**Fig. 5**

600

601

Parameter
configuring unit

602

Power controlling
unit

## Fig. 6

700

703

Receiving unit

601

Parameter
configuring unit

602

Power controlling
unit

## Fig. 7

800

803

Measuring unit

601

Parameter
configuring unit

602

Power controlling
unit

**Fig. 8**

900

903

902

901

**Fig. 9**

# INTERNATIONAL SEARCH REPORT

| International application No. |
| --- |
| PCT/CN2013/080342 |

## A. CLASSIFICATION OF SUBJECT MATTER

H04W 52/28 (2009.01) i

According to International Patent Classification (IPC) or to both national classification and IPC

## B. FIELDS SEARCHED

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC: config+, control, plurality, two, link, high speed, low speed, power, device, cell, D2D, cellular, power control, separate+, terminal, base station, eNB, multiple, UE

## C. DOCUMENTS CONSIDERED TO BE RELEVANT

| Category* | Citation of document, with indication, where appropriate, of the relevant passages | Relevant to claim No. |
| --- | --- | --- |
| X | CN 1178043 A (NOKIA TELECOMMUNICATIONS OY et al.) 01 April 1998 (01.04.1998) description, page 1, line 1 to page 3, line 4 | 1-14 |
| A | US 2012178493 A1 (APPLE INC.) 12 July 2012 (12.07.2012) the whole document | 1-14 |
| A | CN 1311613 A (MITSUBISHI ELECTRIC CORP.) 05 September 2001 (05.09.2001) the whole document | 1-14 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 11 April 2014 | 05 May 2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer YAO, Yaqian Telephone No. (86-10) 62413297 |
| --- | --- |

Form PCT/ISA/210 (second sheet) (July 2009)

INTERNATIONAL SEARCH REPORT

Information on patent family members

International application No.

PCT/CN2013/080342

| Patent Documents referred in the Report | Publication Date | Patent Family | Publication Date |
|---|---|---|---|
| CN 1178043 A | 01 April 1998 | FI 960276 A | 20 July 1997 |
| | | WO 9726716 A2 | 24 July 1997 |
| | | AU 1446197 A | 11 August 1997 |
| | | EP 0815656 A1 | 07 January 1998 |
| | | NO 974312 A | 18 November 1997 |
| | | JP H11506891 A | 15 June 1999 |
| | | US 6104918 A | 15 August 2000 |
| | | DE 69717198 E | 02 January 2003 |
| US 2012178493 A1 | 12 July 2012 | EP 2661930 A2 | 13 November 2013 |
| | | CN 103404211 A | 20 November 2013 |
| | | TW 201242396 A | 16 October 2012 |
| | | WO 2012094521 A2 | 12 July 2012 |
| | | KR 20130121934 A | 06 November 2013 |
| CN 1311613 A | 05 September 2001 | FR 2805703 A1 | 31 August 2001 |
| | | JP 2001274749 A | 05 October 2001 |
| | | EP 1130798 A1 | 05 September 2001 |
| | | US 2001027112 A1 | 04 October 2001 |
| | | AT 225099T | 15 October 2002 |
| | | DE 60100029 E | 31 October 2002 |

Form PCT/ISA /210 (patent family annex) (July 2009)